# EUROPEAN PATENT APPLICATION

(11) **EP 4 351 197 A1**
(43) Date of publication of application: **10.04.2024**
(21) Application number: 22811013.6
(22) Date of filing: 29.03.2022
(51) Int. Cl.: H04W 16/28, H04W 24/10, H04W 72/04

(54) **TERMINAL, WIRELESS COMMUNICATION METHOD, AND BASE STATION**

(30) Priority: 26.05.2021 JP 2021088531
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/015541
(87) International publication number: WO 2022/249738

(57) **Abstract**

A terminal according to an aspect of the present disclosure includes a receiving section that receives configuration of a beam report based on a plurality of groups, and resource setting, and a control section that controls the beam report on the basis of the resource setting, in which at least one limitation of the number of resource sets and the number of resources in the resource setting is different from a limitation in a case where the beam report based on the plurality of groups is not configured. According to an aspect of the present disclosure, resources for measurement/reporting of beams based on groups can be used appropriately.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In Rel. 15 and 16 NR, the UE in which group-based beam reporting is enabled can report only two different beam indices for each report setting. Therefore, beam management-related extensions of a user terminal (User Equipment (UE)) having a plurality of panels (multiple panels), a plurality of transmission/reception points (multiple transmission/reception points (TRP)), and the like have been studied for a future radio communication system.

However, how to configure/determine the measurement resource when performing beam management-related extension has not yet been studied. If this is not clarified, communication quality/communication throughput may decrease.

Therefore, an object of the present disclosure is to provide a terminal, a radio communication method, and a base station that can appropriately use resources for measurement/reporting of beams based on groups.

### Solution to Problem

A terminal according to an aspect of the present disclosure includes a receiving section that receives configuration of a beam report based on a plurality of groups, and resource setting, and a control section that controls the beam report on the basis of the resource setting, in which at least one limitation of the number of resource sets and the number of resources in the resource setting is different from a limitation in a case where the beam report based on the plurality of groups is not configured.

### Advantageous Effects of Invention

According to an aspect of the present disclosure, resources for measurement/reporting of beams based on groups can be used appropriately.

### Brief Description of Drawings

Fig. 1 is a diagram illustrating an example of an RRC information element regarding a CSI resource configuration.
Fig. 2 is a diagram illustrating an example of limitation of a number of resource sets for measurement/reporting of beams for a CSI resource setting in a CSI reporting setting.
Fig. 3 is a diagram illustrating an example of limitation of the number of resources for each resource set/resource setting.
Fig. 4 is a diagram illustrating an example of a beam usage environment assumed for multiple group-based beam reporting.
Fig. 5 is a diagram illustrating an example of limitation of the number of resource sets according to a first embodiment.
Fig. 6 is a diagram illustrating an example of limitation of the number of resources according to a second embodiment.
Figs. 7A and 7B are diagrams illustrating an example of an NZP-CSI-RS resource set information element.
Fig. 8 is a diagram illustrating an example of a schematic configuration of a radio communication system according to an embodiment.
Fig. 9 is a diagram illustrating an example of a configuration of a base station according to the embodiment.
Fig. 10 is a diagram illustrating an example of a configuration of a user terminal according to the embodiment.
Fig. 11 is a diagram illustrating an example of a hardware configuration of a base station and a user terminal according to the embodiment.

### Description of Embodiments

### (CSI)

In NR, the UE measures a channel state by using a reference signal (or a resource for the reference signal) and feeds back (reports) channel state information (CSI) to a network (for example, a base station).

The UE may measure the channel state using at least one of a channel state information reference signal (CSI-RS), a synchronization signal/physical broadcast channel (SS/PBCH) block, a synchronization signal (SS), a demodulation reference signal (DMRS), and the like.

A CSI-RS resource may include at least one of a Non Zero Power (NZP) CSI-RS resource, a Zero Power (ZP) CSI-RS resource, and a CSI Interference Measurement (CSI-IM) resource.

A resource for measuring a signal component for CSI may be referred to as a signal measurement resource (SMR) or a channel measurement resource (CMR). The SMR (CMR) may include, for example, an NZP CSI-RS resource for channel measurement, an SSB, and the like.

A resource for measuring an interference component for CSI may be referred to as an Interference Measurement Resource (IMR). The IMR may include, for example, at least one of the NZP CSI-RS resource for interference measurement, an SSB, a ZP CSI-RS resource, and a CSI-IM resource.

The SS/PBCH block is a block including a synchronization signal (e.g., primary synchronization signal (PSS) and secondary synchronization signal (SSS)) and a PBCH (and the corresponding DMRS), which may be called an SS block (SSB) or the like.

Note that, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI), Layer 1 Reference Signal Received Power (L1-RSRP), L1-Reference Signal Received Quality (RSRQ), an L1-Signal to Interference plus Noise Ratio (SINR), an L1-Signal to Noise Ratio (SNR), and the like.

The CSI may include a plurality of parts. A CSI part 1 may include information with a relatively small number of bits (for example, the RI). A CSI part 2 may include information with a relatively large number of bits (for example, the CQI) such as information determined on the basis of the CSI part 1.

Furthermore, the CSI may also be classified into several CSI types. The type and size of information to be reported may be different depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be specified. The usage of the CSI type is not limited to those.

As a method for feeding back the CSI, periodic CSI (P-CSI) reporting, aperiodic CSI (A-CSI) reporting, semi-persistent CSI (SP-CSI) reporting and the like are under study.

The UE may be notified of CSI measurement configuration information using higher layer signaling, physical layer signaling, or a combination thereof.

In the present disclosure, higher layer signaling may be, for example, any of RRC signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, Downlink Control Information (DCI).

The CSI measurement configuration information may be configured using, for example, the RRC information element "CSI-MeasConfig". The CSI measurement configuration information may include CSI resource configuration information (RRC information element "CSI-ResourceConfig"), CSI report configuration information (RRC information element "CSI-ReportConfig"), and the like. The CSI resource configuration information is related to a resource for CSI measurement, and the CSI report configuration information is related to how the UE performs CSI reporting.

The CSI report configuration information ("CSI-ReportConfig") includes channel measurement resource information ("resourcesForChannelMeasurement"). Furthermore, the CSI report configuration information may include resource information for interference measurement (for example, NZP CSI-RS resource information for interference measurement ("nzp-CSI-RS-ResourcesForInterference"), CSI-IM resource information for interference measurement ("csi-IM-ResourcesForInterference"), and the like. These pieces of resource information correspond to CSI resource configuration information IDs (Identifiers) ("CSI-ResourceConfigId").

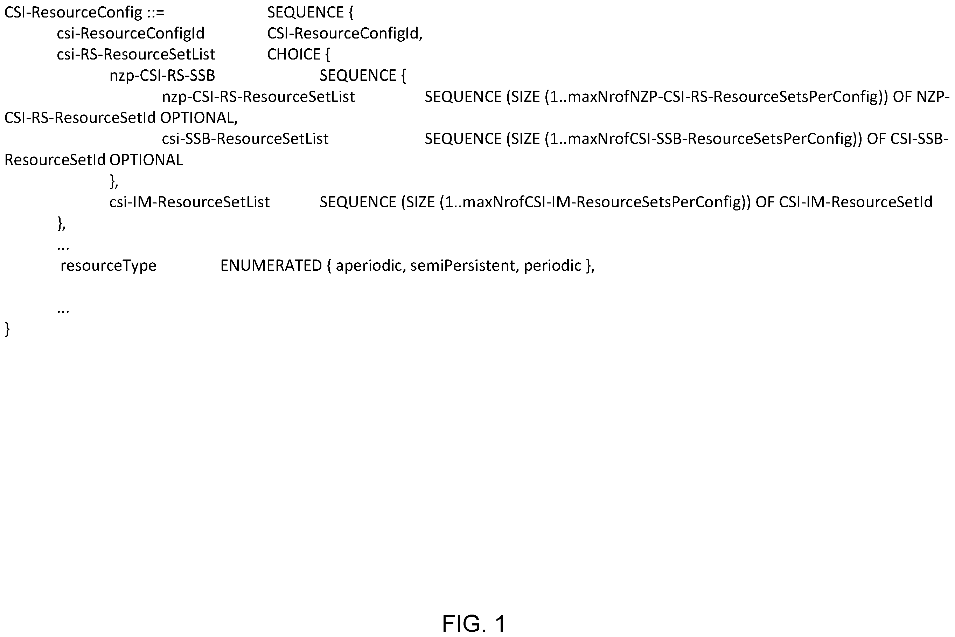

Fig. 1 is a diagram illustrating an example of an RRC information element regarding a CSI resource configuration. In this example, an excerpt of a field (which may be referred to as a parameter) included in an information element is illustrated. The drawing is described using Abstract Syntax Notation One (ASN.1) notation. Note that, drawings relating to other RRC information elements (or RRC parameters) of the present disclosure are also described in the similar notation.

Note that, the CSI resource configuration information IDs (which may be referred to as CSI resource configuration IDs) corresponding to respective pieces of resource information may have the same value in one or more IDs or may respectively have different values.

As illustrated in Fig. 1, the CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of NZP CSI-RS and SSB information ("nzp-CSI-RS-SSB") for measurement and CSI-IM resource set list information ("csi-IM-ResourceSetList").

The resource type represents a behavior of a time domain of the resource configuration, and "aperiodic", "semi-persistent", and "periodic" can be configured. For example, corresponding CSI-RSs may be referred to as an A-CSI-RS, an SP-CSI-RS, and a P-CSI-RS.

Note that, a resource for channel measurement may be used for calculation of, for example, the CQI, PMI, L1-RSRP, and the like. Furthermore, a resource for interference measurement may be used for calculation of the L1-SINR, L1-SNR, L1-RSRQ, and other indicators regarding interference.

When the interference measurement is performed with CSI-IM, each CSI-RS for channel measurement may be associated with the CSI-IM resource in terms of resources, on the basis of the order of the CSI-RS resource and the CSI-IM resource in the corresponding resource set.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). These pieces of list information correspond to one or more NZP CSI-RS resource set IDs ("NZP-CSI-RS-ResourceSetId") and CSI-SSB resource set IDs ("CSI-SSB-ResourceSetId"), and may be used for specifying a resource as a measurement target.

When the resource type (resourceType) is aperiodic, the NZP CSI-RS resource set list information includes IDs of resource sets up to the maximum number of NZP CSI-RS resource sets per configuration (maxNrofNZP-CSI-RS-ResourceSetsPerConfig = 16). Otherwise, the NZP CSI-RS resource set list information includes an ID of one resource set.

The SSB resource set list information for CSI measurement includes an ID of a resource set of the maximum number of CSI-SSB resource sets per configuration (maxNrofCSI-SSB-ResourceSetsPerConfig = 1).

When the resource type (resourceType) is aperiodic, the CSI-IM resource set list information includes IDs of resource sets up to the maximum number of CSI-IM resource sets per configuration (maxNrofCSI-IM-ResourceSetsPerConfig = 16). Otherwise, the CSI-IM resource set list information includes an ID of one resource set.

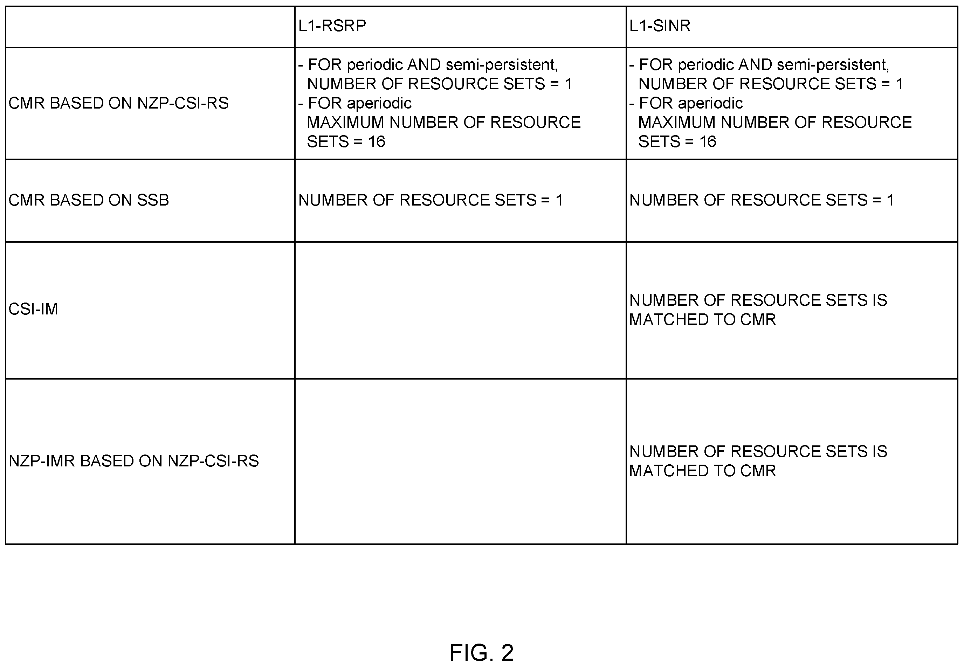

Fig. 2 is a diagram illustrating an example of limitation of a number of resource sets for measurement/reporting of beams for a CSI resource setting in a CSI reporting setting.

For the CMR based on the NZP-CSI-RS for L1-RSRP, the number of resource sets in the periodic and semi-persistent CSI resource settings is one. For the CMR based on the NZP-CSI-RS for L1-RSRP, the number of resource sets in the aperiodic CSI resource setting is up to 16. Here, each resource set has up to 64 resources. The total number of different CSI-RS resources across all resource sets is up to 128.

For the CMR based on the NZP-CSI-RS for L1-SINR, the number of resource sets in the periodic and semi-persistent CSI resource settings is one. For the CMR based on the NZP-CSI-RS for L1-SINR, the number of resource sets in the aperiodic CSI resource settings is up to 16. Here, all resource sets have up to 64 CSI-RS resources or up to 64 SS/PBCH block resources.

Only one aperiodic CSI-RS resource set from the resource settings is associated with one trigger state in the CSI aperiodic trigger state list (CSI-AperiodicTriggerStateList).

For CMR based on SSB for L1-RSRP, the number of resource sets is one. For CMR based on SSB for L1-SINR, the number of resource sets is one.

For CSI-IM for L1-SINR, it is matched to CMR according to one-to-one mapping between CMR and IMR.

For NZP-IMR based on NZP-CSI-RS for L1-SINR, it is matched to CMR according to one-to-one mapping between CMR and IMR.

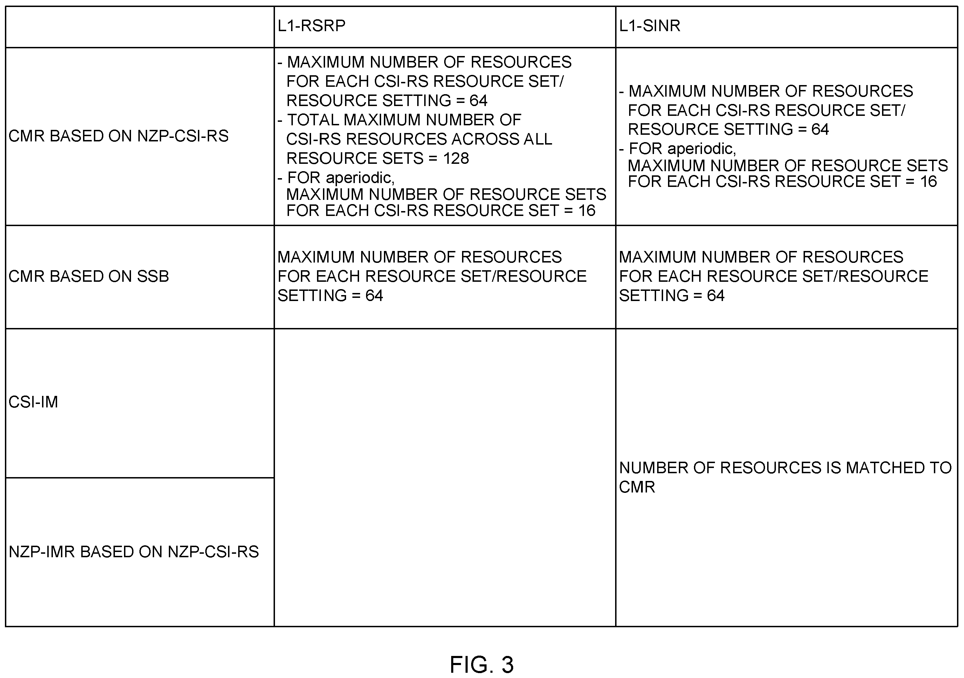

Fig. 3 illustrates an example of limitation of the number of resources for each resource set/resource setting.

For the CMR based on the NZP-CSI-RS for L1-RSRP, up to 64 resources are configured for each CSI-RS resource set/resource setting. The total number of CSI-RS resources across all resource sets is up to 128. For aperiodic resource settings, the number of resources per CSI-RS resource set is up to 16.

For the CMR based on the NZP-CSI-RS for L1-SINR, up to 64 resources are configured for each CSI-RS resource set/resource setting. For aperiodic resource settings, the number of resources per CSI-RS resource set is up to 16.

For the CMR based on the SSB for L1-RSRP, up to 64 resources are configured for each CSI-RS resource set/resource setting.

For the CMR based on the SSB for L1-SINR, up to 64 resources are configured for each CSI-RS resource set/resource setting.

For CSI-IM for L1-SINR, the number of resources for each resource set/resource setting is matched to CMR according to one-to-one mapping between CMR and IMR.

For NZP-IMR based on the NZP-CSI-RS for L1-SINR, the number of resources for each resource set/resource setting is matched to CMR according to one-to-one mapping between CMR and IMR.

The UE does not assume that more than 64 NZP CSI-RS resources and/or SS/PBCH blocks are configured in the resource setting for channel measurement for a CSI report configuration (CSI-ReportConfig) with a reporting quantity (reoprtQuantity) set to 'none' or 'cri-RI-CQI' or 'cri-RSRP' or 'ssbIndex-RSRP' or 'cri-SINR' or `ssbIndex-SINR'.

If the UE is configured with a CSI report configuration with a report quantity set to 'cri-RSRP' or 'cri-SINR' or 'none', and the CSI report configuration is linked to a resource setting configured with an aperiodically set resource type, the UE does not assume that more than 16 CSI-RS resources are configured in the CSI-RS resource set included in the resource setting.

For group-based beam reporting, it is contemplated that two CMR resource sets are configured for two TRPs for each periodic/semi-persistent CMR resource setting.

The NZP CSI-RS resource set information ("NZP-CSI-RS-ResourceSet") includes the NZP CSI-RS resource set ID and one or more NZP CSI-RS resource IDs ("NZP-CSI-RS-ResourceId").

NZP CSI-RS resource information ("NZP-CSI-RS-Resource") may include the NZP CSI-RS resource ID and an ID ("TCI-stateId") of a Transmission Configuration Indication state (TCI state). The TCI state will be described later.

CSI-SSB resource set information ("CSI-SSB-ResourceSet") includes the CSI-SSB resource set ID and one or more pieces of SSB index information ("SSB-Index"). The SSB index information is, for example, an integer of 0 or more and 63 or less, and may be used for identifying the SSB in an SS burst.

The TCI state is information regarding quasi-co-location (QCL) of a channel or a signal, and may also be referred to as a spatial reception parameter, spatial relation info, or the like. The TCI state may be configured or specified for the UE per channel or per signal.

The TCI state information ("TCI-State") may include a TCI state ID and one or more pieces of QCL information ("QCL-Info"). The QCL information may include at least one of information regarding a reference signal of a QCL source (RS-related information ("referenceSignal")) and information indicating a QCL type (QCL type information ("qcl-Type")). The RS-related information may include information such as an index of an RS (for example, NZP CSI-RS resource ID, SSB index), an index of a serving cell, and an index of a bandwidth part (BWP) in which the RS is located.

The UE may control reception processing (for example, at least one of reception, demapping, demodulation, decoding, reception beam determination, and the like), transmission processing (for example, at least one of transmission, mapping, modulation, encoding, Tx beam determination, and the like), and the like, on the basis of the TCI state corresponding to the TCI state ID associated with at least one of the signal and the channel (expressed as signal/channel).

Note that in the present disclosure, "A/B" may indicate "at least one of A and B".

For a P-CSI-RS, an associated TCI state may be configured by RRC. Note that for the P-CSI-RS, the SP-CSI-RS, and the A-CSI-RS, the related TCI state may be determined on the basis of higher layer signaling, physical layer signaling, or a combination thereof.

### (Beam Management)

In Rel. 15 NR, a beam management (BM) method has been studied. In the beam management, it has been studied to perform beam selection on the basis of the L1-RSRP reported by the UE. Changing (switching) a beam of a signal/channel may be equivalent to changing at least one of a TCI state and a QCL assumption of the signal/channel.

The UE may report (transmit) a measurement result for beam management using a physical uplink control channel (PUCCH) or a physical uplink shared channel (PUSCH). The measurement result may be, for example, CSI including at least one of the L1-RSRP, L1-RSRQ, L1-SINR, L1-SNR, and the like.

A measurement result (for example, CSI) reported for beam management may be referred to as a beam measurement, a beam measurement report, a beam report, a beam report CSI, or the like.

The CSI measurement for the beam report may include interference measurement. The UE may measure channel quality, interference, and the like using a resource for CSI measurement, and derive the beam report.

The beam report may include a result of at least one of channel quality measurement and interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

The CSI report configuration information may include a "report quantity" (which may be represented by an RRC parameter "reportQuantity") that is information of a parameter to be reported in one report instance (for example, one CSI). The report quantity is defined by the type of the ASN.1 object "choice". Therefore, one of the parameters (cri-RSRP, ssb-Index-RSRP, and the like) defined as the report quantity is configured.

The UE in which the higher layer parameter (for example, the RRC parameter "groupBasedBeamReporting" for group-based beam reporting) included in the CSI report configuration information is disabled may include, for each report setting, beam measurement resource IDs (for example, SSBRI, CRI) having different numbers of higher layer parameters (for example, the RRC parameter "nrofReportedRS" indicating the number of reported RSs) included in the CSI report configuration information and measurement results (for example, L1-RSRP) corresponding to the respective IDs in the beam report (one report instance).

The UE in which groupBasedBeamReporting is enabled may include, for each report setting, two different beam measurement resource IDs and two measurement results (for example, L1-RSRP) corresponding to the respective IDs in the beam report. In other words, the UE with groupBasedBeamReporting enabled divides the DL-RS (for example, CSI-RS) into two groups and reports the ID and the measurement value for the RS corresponding to the higher measurement results in each group. Note that the two beam measurement resources (CSI-RS resource, SSB resource) may be simultaneously received by the UE by using one spatial domain reception filter or may be simultaneously received by the UE by using a plurality of simultaneous spatial domain reception filters.

In addition, the NZP CSI-RS resource set information may include information about repetition in the resources in the resource set. The information regarding the repetition may indicate, for example, 'on' or 'off' . Note that 'on' may be expressed as 'enabled' or 'valid', and 'off' may be expressed as 'disabled' or 'invalid'.

For example, for a resource set for which repetition is configured to be 'on', the UE may assume that a resource in the resource set has been transmitted using the same downlink spatial domain transmission filter. In this case, the UE may assume that the resource in the resource set has been transmitted using the same beam (for example, from the same base station using the same beam).

For a resource set for which repetition is configured to be 'off', the UE may perform control such that the UE should not assume (or does not have to assume) assume that the resource in the resource set has been transmitted using the same downlink spatial domain transmission filter. In this case, the UE may assume that the resource in the resource set is not transmitted using the same beam (transmitted using a different beam). In other words, the UE can assume that the base station performs beam sweeping for a resource set for which repetition is set to "off".

In Rel. 15 NR, cri-RSRP and ssb-Index-RSRP of the report quantities are related to beam management. The UE in which the cri-RSRP is set as the report quantity reports the CRI and the L1-RSRP corresponding to the CRI. The UE in which the ssb-Index-RSRP is set as the report quantity reports the SSBRI and the L1-RSRP corresponding to the SSBRI.

The CSI report may include one or more sets of CRI/SSBRI and RSRP. The number of these sets may be set by a higher layer parameter (for example, the RRC parameter "nrofReportedRS") indicating the number of reference signal resources to be reported.

For L1-RSRP reporting, when nrofReportedRS is set to 1 (a value is `n1'), RSRP #1, which is a field of a given number of bits (for example, m bits) indicating L1-RSRP of the largest measurement value, is included in the CSI report. In Rel. 15 NR, m = 7 is satisfied.

For L1-RSRP reporting, when nrofReportedRS is set to be greater than 1, or groupBasedBeamReporting is enabled, the UE uses difference L1-RSRP-based reporting. Specifically, the UE includes, in the same CSI report (reporting instance), RSRP #1 indicating the L1-RSRP having the largest measurement value and a difference RSRP #k calculated (for example, as a difference from the measurement value,) with reference to the largest measurement value for the L1-RSRP having the k-th largest (for example, k = 2, 3, and 4) measurement value. Here, the difference RSRP #k may be a field of bits with the number (for example, n bits) smaller than the given number. In Rel. 15 NR, n = 4 is satisfied.

For example, for each group, 7 bits of the absolute RSRP value for the first beam (range from -140 to -44 dBm using 1 dB step size) and 4 bits of the difference RSRP value for the second beam are reported.

Note that when groupBasedBeamReporting is enabled, the UE includes the RSRP #1 and the difference RSRP #2 in the same CSI report.

In the CSI report, the CRI/SSBRI #k is a field indicating the CRI/SSBRI corresponding to the RSRP #k or the difference RSRP #k (included in a case where the RSRP #k or the difference RSRP #k is reported).

Note that in NR Rel. 16 and beyond, nrofReportedRS may be a value of 4 or more, or may be 4 or more. The CSI report may include four or more sets of CRI/SSBRI and RSRP. The above m and n are not limited to 7 and 4, respectively.

In addition, in NR Rel. 16 and beyond, the L1-SINR report may be performed. For the L1-SINR report, contents obtained by replacing RSRP in the L1-RSRP report described above with SINR may be applied. Note that, in this case, the configuration/parameter for the SINR may be different from the configuration/parameter for the RSRP, and for example, the nrofReportedRS may be replaced with nrofReportedRSForSINR indicating the number of reference signal resources to be reported for the SINR.

### (Extended Group Base Beam Report)

Beam management-related extensions (for example, beam reports suitable for a plurality of TRPs, or may referred to as extended group base beam report) of a user terminal (User Equipment (UE)) having a plurality of panels (multiple panels), a plurality of transmission/reception points (multiple transmission/reception points (TRP)), and the like have been studied for a future radio communication system (for example, Rel. 17 NR).

Since the above-described groupBasedBeamReporting can be reported in one report for two groups, it is suitable when multi-TRP transmission, multi-panel reception, or the like is applied. For example, the best beam (corresponding to the best/the highest measurement result) of the TRP 1 as the RSRP #1 and the best beam of the TRP 2 as the difference RSRP #2 can be used for reporting.

As described above, in Rel. 15 and 16, the UE in which group-based beam reporting is enabled can report only two different CRI/SSBRI (which may be replaced with beam indices) for each report setting. Therefore, for Rel. 17, it has been studied to cause the number of groups that can be reported by the group-based beam reporting to be larger than 2. In addition, for more flexible reporting, a configuration capable of reporting two or more CRIs/SSBRIs in a group has also been studied.

Such group-based beam reporting using beam report (a beam report in which the number of groups for the report is greater than two or two or more CRI/SSBRIs are reported in the group for the report) may be referred to as multiple group-based beams, enhanced group-based beam reporting, Rel. 17 group-based beam reporting, etc. (hereinafter, referred to as multiple group-based beam reporting).

For the situation of operating multiple group-based beam reporting, the following two modes are conceivable:
- Mode 1: The UE can simultaneously receive a plurality of beams that belong to different groups; and
- Mode 2: The UE can simultaneously receive a plurality of beams that belong to the same group.

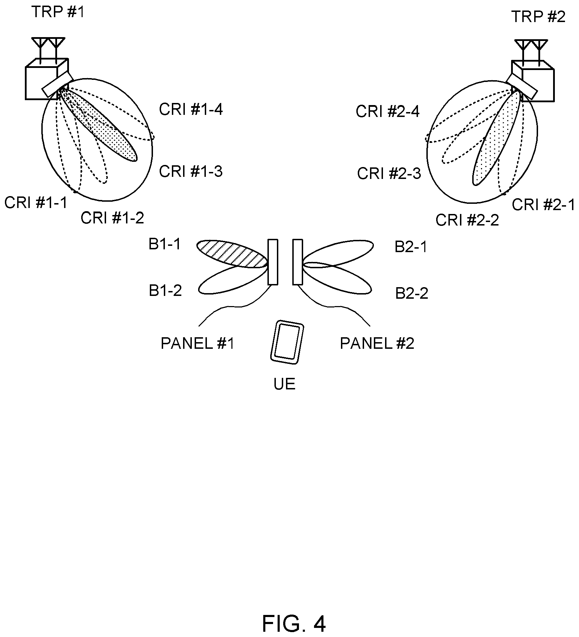

Hereinafter, the situation of operating multiple group-based beam reporting will be explained using the environment of Fig. 4 as an example. Fig. 4 is a diagram illustrating an example of a beam usage environment assumed for multiple group-based beam reporting.

In Fig. 4, the UE measures resources of reference signals (CSI-RS) transmitted from two TRPs (TRPs #1 and #2). The UE has two panels (panels #1 and #2), and each panel can form a different beam (B1-1, B1-2, B2-1, B2-2) .

TRP #1 transmits the CSI-RS using resources of CRI #1-1 to CRI #1-4 corresponding to different beams, respectively. TRP #2 transmits the CSI-RS using the resources of CRI #2-1 to CRI #2-4 corresponding to different beams, respectively. In the present disclosure, the beams of CRI #1-1 to CRI #1-4 may be read as Tx beams #1 to #4, respectively. In the present disclosure, the beams of CRI #2-1 to CRI #2-4 may be read as Tx beams #5 to #8, respectively.

Note that each TRP and UE may transmit/receive by sweeping each beam (using different times/frequencies), or may transmit/receive by simultaneously using several beams.

Note that Fig. 4 is an example, and for example, TRPs #1 and #2 may be read as two panels of a given TRP (panel #1, #2).

The RSRP/SINRs corresponding to CRI #1-1 to CRI #1-4 may be denoted as RSRP/SINR #1-1 to RSRP/SINR #1-4, respectively. The RSRP/SINRs corresponding to CRI #2-1 to CRI #2-4 may be denoted as RSRP/SINR #2-1 to RSRP/SINR #2-4, respectively.

In addition, hereinafter, a resource corresponding to a given CRI may be simply referred to as a given CRI (for example, CRI #1-1 may mean CRI #1-1, or may mean a resource corresponding to CRI #1-1.).

In the present disclosure, it is assumed that one resource configuration (which may be referred to as a reference signal (RS) configuration) corresponds to (is associated with) one TRP. A resource configuration corresponding to one TRP may correspond to, for example, at least one of CSI resource configuration information ("CSI-ResourceConfig"), a CSI-RS resource set list, an NZP CSI-RS resource set, and a CSI-SSB resource set.

For example, in Fig. 4, RRC configuration may be performed as follows. The CSI report configuration #0 configured for the UE includes CSI resource configurations #0 and #1. The CSI resource configuration #0 relates to resource set #0 (CSI-RS resource set #0), and four CSI-RS resources corresponding to CRI #1-1 to CRI #1-4 are set in the resource set #0. The CSI resource configuration #1 relates to resource set #1 (CSI-RS resource set #1), and four CSI-RS resources corresponding to CRI #2-1 to CRI #2-4 are set in the resource set #1.

Note that, even in a case where one resource configuration corresponds to (is associated with) a plurality of TRPs, the content of the present disclosure may be applied.

For example, the UE selects two beams from TRP #1 to be measured by using the panel #1, and selects two beams from TRP #2 to be measured by using the panel #2. In this example, the UE assumes that the panel #1 is related to group #1 and the panel #2 is related to group #2.

For example, the UE selects, for each group, a beam from one TRP measured using the panel #1 and a beam from the other TRP measured using the panel #2.

One of the above mode 1 and mode 2 may be supported by the UE, or both may be supported.

The measurement/reporting of the beam may be according to at least one of the following options 1 to 3. This beam measurement/reporting may be used for inter-TRP beam pairing. Here, option 1 corresponds to mode 1, and option 2 corresponds to mode 2.

### [Option 1]

In CSI reporting, the UE may report N (N > 1) pairs/groups and M (M > = 1) beams per pair/group. Different beams in different pairs/groups may be received simultaneously.

### [Option 2]

In CSI reporting, the UE may report N (N > = 1) pairs/groups and M (M > 1) beams per pair/group. Different beams in one pair/group may be received simultaneously.

### [Option 3]

The UE may report M (M > = 1) beams in N (N > 1) CSI reports corresponding to N (N > 1) reporting settings. Different beams corresponding to different CSI reports may be received simultaneously.

### (Analysis)

In one CSI resource setting for one CSI report configuration, for two CMR resource sets for group-based beam reporting, the following problems are considered.

[Problem 1] CMR resource set configuration for P/SP/AP CSI resource setting for L1-RSRP/L1-SINR is not clear.

[Problem 2] CMR resource set configuration for each resource set/resource setting for L1-RSRP/L1-SINR is not clear.

If such a resource set configuration is not clear, there is a possibility of causing a decrease in communication quality/throughput.

Therefore, the present inventors have conceived a method of setting measurement resources for group-based beam reporting.

Hereinafter, embodiments according to the present disclosure will be described in detail with reference to the drawings. The radio communication methods according to the embodiments may be applied alone or in combination.

Note that, in the present disclosure, a panel (reception panel, UE panel), an uplink (UL) transmission entity, a TRP, a spatial relation, a control resource set (CORESET), a PDSCH, a codeword, a base station, an antenna port (e.g., demodulation reference signal (DMRS) port), an antenna port group (e.g., DMRS port group), a group (e.g., code division multiplexing (CDM) group, reference signal group, CORESET group, and CORESET pool), a reference signal configuration, a reference signal set configuration, and the like may be replaced with each other.

The panel identifier (ID) and the panel may be replaced with each other. The TRP ID and the TRP may be replaced with each other. In addition, the index and the ID may be replaced with each other.

Note that in the present disclosure, the group may be replaced with a set, a cluster, a panel, and a group related to a beam (to be reported), a pair, a set, a grouping, a TRP, or the like.

In the following embodiments, the beam index may be replaced with, for example, CRI/SSBRI. In addition, the RSRP/SINR may be replaced with an arbitrary beam-related measurement result.

In addition, the CSI-RS related names may be replaced with corresponding SSB related names. For example, a CSI-RS resource may be replaced with an SSB resource. In other words, CSI-RS may be read as CSI-RS/SSB, and CRI may be read as CRI/SSBRI.

Furthermore, in the present disclosure, a "reception panel" may correspond to at least one of an RS group, a TRP index, a CORESET pool index, an RS group configured for group-based beam reporting, a TCI state (or TCI) group, a QCL assumption (or QCL) group, and a beam group.

In addition, in the present disclosure, measurement/reporting of a group-based beam for multi-TRP transmission or multi-panel UE reception, beam reporting based on multiple groups, and multiple group-based beam reporting may be replaced with each other.

In addition, in the present disclosure, resource settings, CSI resource settings, and CSI resource configurations (CSI-ResourceConfig) may be replaced with each other.

In addition, in the present disclosure, reporting settings, CSI report settings, and CSI report configurations (CSI-ReportConfig) may be replaced with each other.

Further, in the present disclosure, each and per may be replaced with each other.

In addition, in the present disclosure, levels, parameters, configurations, information elements, sets, groups, and associations may be replaced with each other.

In the present disclosure, measurement results RSRP, SINR, L1-RSRP, L1-RSRP, SS-RSRP, CSI-RSRP, SSS-SINR, and CSI-SINR may be replaced with each other.

At least one of beam measurement, beam reporting, and CSI reporting in each embodiment may be applied to at least one of a serving cell and a non-serving cell. For example, a plurality of groups/pairs may be separately associated with a plurality of cells, and each cell may be a serving cell or a non-serving cell.

### (Radio Communication Method)

### <First Embodiment>

For measurement/reporting of group-based beams to CSI resource settings for multi-TRP transmission or multi-panel UE reception, the number of resource sets configured by RRC may be limited/determined/defined using conditions/values.

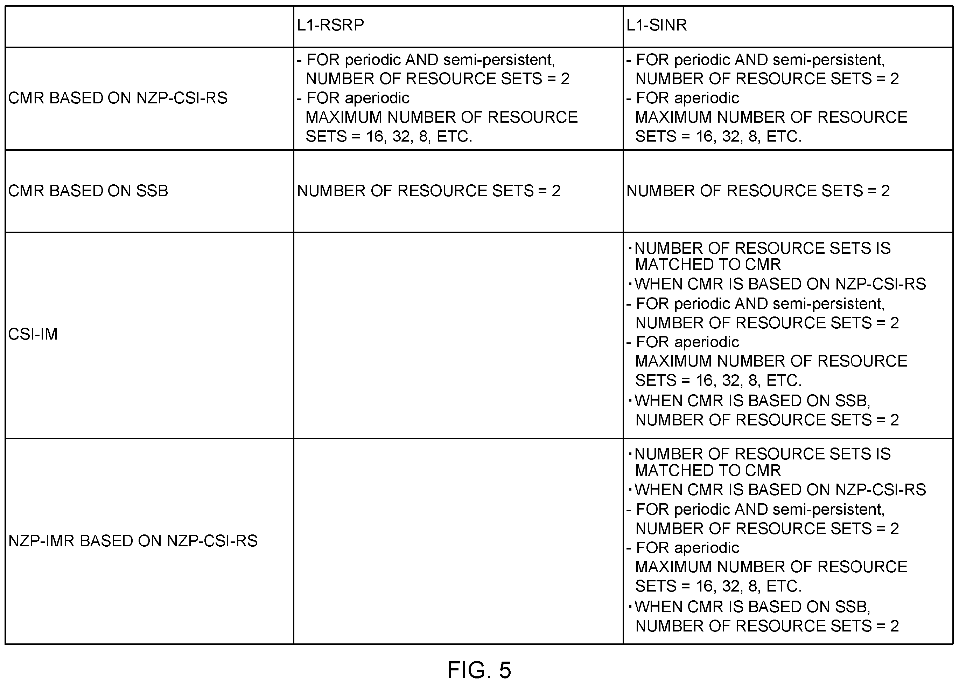

The number of resource sets may be according to at least one of the following cases 1 to 6 (Fig. 5).

### [Case 1]

For the CMR based on the NZP-CSI-RS for L1-RSRP, the number of resource sets in the periodic and semi-persistent CSI resource settings may be two, or may be another value.

For the CMR based on the NZP-CSI-RS for L1-RSRP, the maximum number of resource sets in the aperiodic CSI resource setting may be any one of 16 (the same as the existing value), 32 (more than existing value, e.g., two times), and 8 (less than existing value, e.g. 1/2), or may be another value.

### [Case 2]

For the CMR based on the NZP-CSI-RS for L1-SINR, the number of resource sets in the periodic and semi-persistent CSI resource settings may be two, or may be another value.

For the CMR based on the NZP-CSI-RS for L1-SINR, the maximum number of resource sets in the aperiodic CSI resource setting may be any one of 16 (the same as the existing value), 32 (more than existing value, e.g., two times), and 8 (less than existing value, e.g. 1/2), or may be another value.

### [Case 3]

For CMR based on SSB for L1-RSRP, the number of resource sets may be two, or may be another value.

### [Case 4]

For CMR based on SSB for L1-SINR, the number of resource sets may be two, or may be another value.

### [Case 5]

For CSI-IM for L1-SINR, it is matched to CMR according to one-to-one mapping between CMR and IMR.

In a case where the CMR is based on the NZP-CSI-RS, the number of CSI-IM resource sets in the periodic and semi-persistent resource settings may be two, or may be another value.

The maximum number of CSI-IM resource sets in the aperiodic CSI resource setting may be any one of the same as the existing value (for example, 16), a value more than the existing value (for example, 32 which is twice the existing value), and a value less than the existing value (for example, 8 which is half the existing value), or may be another value. If CMR is based on SSB, the number of CSI-IM resource sets may be two, or may be another value.

### [Case 6]

For NZP-IMR based on NZP-CSI-RS for L1-SINR, it is matched to CMR according to one-to-one mapping between CMR and IMR.

In a case where the CMR is based on the NZP-CSI-RS, the number of CSI-IM resource sets in the periodic and semi-persistent resource settings may be two, or may be another value.

The maximum number of CSI-IM resource sets in the aperiodic CSI resource setting may be any one of the same as the existing value (for example, 16), a value more than the existing value (for example, 32 which is twice the existing value), and a value less than the existing value (for example, 8 which is half the existing value), or may be another value. If CMR is based on SSB, the number of CSI-IM resource sets may be two, or may be another value.

### [Variations]

For aperiodic resource settings (CSI resource setting with aperiodic resource type (CSI-ResourceConfig), CSI aperiodic trigger state list setting), one or two CSI-RS resource sets may be associated with one trigger state. Two CSI-RS resource sets associated with one trigger state may be used only for group-based beam reporting.

For a UE in which higher layer parameters of a CSI aperiodic trigger state list (CSI-AperiodicTriggerStateList) are configured, if one resource setting linked to one CSI report configuration (CSI-ResourceConfig) has a plurality of aperiodic resource sets, one or two of the aperiodic CSI-RS resource sets from the resource setting may be associated with that trigger state and the UE may be higher layer configured to select one or two resource sets of CSI-IM/NZP CSI-RS from the resource setting per trigger state and per resource setting. Only when the higher layer parameter (groupBasedBeamReporting) of the group-based beam reporting is set to `enabled', one or both of the two CSI-RS resource sets and the two CSI-IM/NZP CSI-RS resource sets may be configured.

For aperiodic resource settings, if X CSI resource sets are RRC configured, the UE may follow any of the following choices 1 and 2 as to how to ensure that two CSI-RS resource sets configured for one trigger state are for different TRPs or different UE panels.

### [Choice 1]

The operation is based on an implementation. If two CSI-RS resource sets are configured in association with one trigger state, the UE assumes that the two CSI-RS resource sets correspond to different TRPs or different UE panels.

### [Choice 2]

The X CSI-RS resource sets are grouped into Y groups, and different groups correspond to different TRPs or different UE panels. It may be specified that for group-based beam reporting, the UE assumes that two CSI-RS resource sets configured for one trigger state are in different groups.

The grouping may be implicit. For example, the first X/2 sets may be for the first TRP and the remaining X/2 sets may be for the second TRP. The grouping may be explicit. For example, a grouping ID for each CSI-RS resource set may be notified.

An association between one group and one TRP may be configured. For example, a CORESET pool index, another RS ID, a grouping ID, and the like may be configured for the group.

In accordance with this embodiment, the UE may appropriately configure the number of resource sets/resource sets/RRC IE for group-based beam reporting for a multi-TRP/multi-UE panel.

### <Second Embodiment>

For measurement/reporting of group-based beams to CSI resource settings for multi-TRP transmission or multi-panel UE reception, the number of resources configured by RRC may be limited/determined/defined using conditions/values.

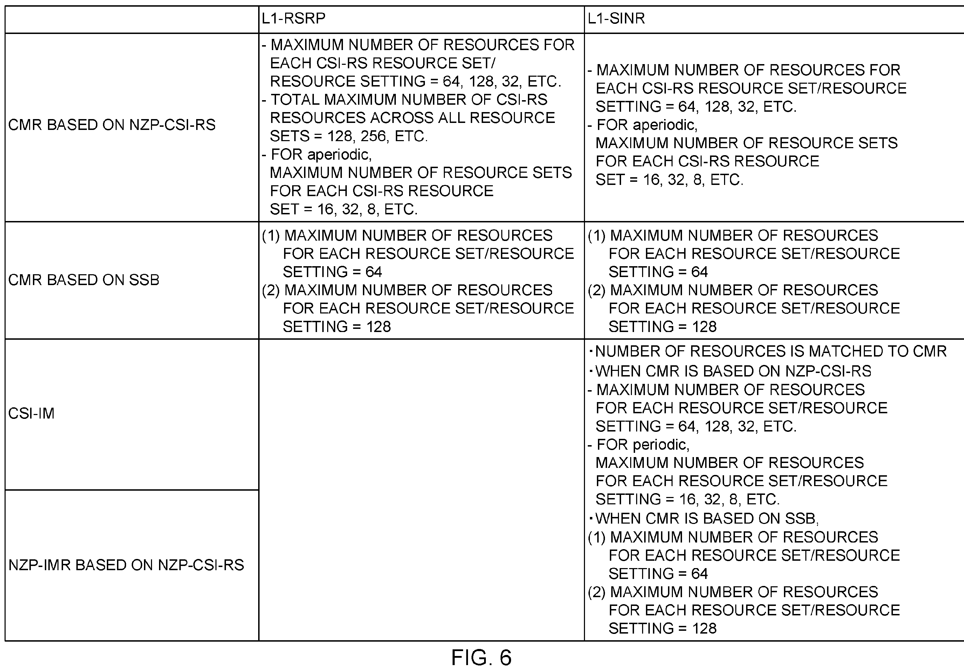

The number of resources may be according to at least one of the following cases 1 to 6 (Fig. 6).

### [Case 1]

For the CMR based on the NZP-CSI-RS for L1-RSRP, at least one of the maximum numbers of resources per the CSI-RS resource set/resource setting may be any one of the same as the existing value (for example, 64), a value more than the existing value (for example, 128 which is twice the existing value), and a value less than the existing value (for example, 32 which is half the existing value), or may be another value. The total maximum number of CSI-RS resources across all resource sets may be one of the same value as the existing value (for example, 128), a value more than the existing value (for example, 256 which is twice the existing value), or may be another value.

The maximum number of resource per resource set in the aperiodic CSI resource setting may be any one of the same as the existing value (for example, 16), a value more than the existing value (for example, 32 which is twice the existing value), and a value less than the existing value (for example, 8 which is half the existing value), or may be another value.

### [Case 2]

For the CMR based on the NZP-CSI-RS for L1-SINR, at least one of the maximum numbers of resources per the CSI-RS resource set/resource setting may be any one of the same as the existing value (for example, 64), a value more than the existing value (for example, 128 which is twice the existing value), and a value less than the existing value (for example, 32 which is half the existing value), or may be another value.

The maximum number of resource per resource set in the aperiodic CSI resource setting may be any one of the same as the existing value (for example, 16), a value more than the existing value (for example, 32 which is twice the existing value), and a value less than the existing value (for example, 8 which is half the existing value), or may be another value.

### [Case 3]

For the CMR based on the NZP-CSI-RS for L1-RSRP, the number of resources may be according to one of the following choices 1 and 2.

### [[Choice 1]]

The maximum number of resources per resource set/resource setting may be the existing value (for example, 64).

### [[Choice 2]]

The maximum number of resources per resource set/resource setting may be a value more than the existing value (for example, 128 which is twice the existing value).

When the PCI of the serving cell is used (intra-cell), choice 1 is applied even when there are two TRPs, and the total maximum number of resources of the SSB may be 64. Choice 2 is applied only when additional different PCI cells are configured (inter-cell), and the maximum number of resources for each TRP may be 64.

### [Case 4]

For the CMR based on the NZP-CSI-RS for L1-SINR, the number of resources may be according to one of the following choices 1 and 2.

### [[Choice 1]]

The maximum number of resources per resource set/resource setting may be the existing value (for example, 64).

### [[Choice 2]]

The maximum number of resources per resource set/resource setting may be a value more than the existing value (for example, 128 which is twice the existing value).

When the PCI of the serving cell is used (intra-cell), choice 1 is applied even when there are two TRPs, and the total maximum number of resources of the SSB may be 64. Choice 2 is applied only when additional different PCI cells are configured (inter-cell), and the maximum number of resources for each TRP may be 64.

### [Case 5]

For CSI-IM for L1-SINR, the number of IMR resources is matched to the number of CMR resources according to one-to-one mapping between CMR and IMR.

The maximum number of resource (IMR) per CSI-IM resource set/resource setting may be any one of the same as the existing value (for example, 64), a value more than the existing value (for example, 128 which is twice the existing value), and a value less than the existing value (for example, 32 which is half the existing value), or may be another value.

The maximum number of resource (IMR) per CSI-IM resource set/resource setting in the aperiodic CSI resource setting may be any one of the same as the existing value (for example, 16), a value more than the existing value (for example, 32 which is twice the existing value), and a value less than the existing value (for example, 8 which is half the existing value), or may be another value.

If the CMR is based on SSB, the maximum number of resources (IMR) per CSI-IM resource set/resource setting may be according to one of the following choices 1 and 2.

### [[Choice 1]]

The maximum number of resources (IMR) per CSI-IM resource set/resource setting may be the existing value (for example, 64).

### [[Choice 2]]

The maximum number of resources (IMR) per CSI-IM resource set/resource setting may be a value more than the existing value (for example, 128 which is twice the existing value).

### [Case 6]

For NZP-IMR based on NZP-CSI-RS for L1-SINR, the number of IMR resources is matched to the number of CMR resources according to one-to-one mapping between CMR and IMR.

The maximum number of resource (IMR) per NZP-IMR resource set/resource setting may be any one of the same as the existing value (for example, 64), a value more than the existing value (for example, 128 which is twice the existing value), and a value less than the existing value (for example, 32 which is half the existing value), or may be another value.

The maximum number of resource (IMR) per NZP-IMR resource set/resource setting in the aperiodic CSI resource setting may be any one of the same as the existing value (for example, 16), a value more than the existing value (for example, 32 which is twice the existing value), and a value less than the existing value (for example, 8 which is half the existing value), or may be another value.

If the CMR is based on SSB, the maximum number of resources (IMR) per NZP-IMR resource set/resource setting may be according to one of the following choices 1 and 2.

### [[Choice 1]]

The maximum number of resources (IMR) per NZP-IMR resource set/resource setting may be the existing value (for example, 64).

### [[Choice 2]]

The maximum number of resources (IMR) per NZP-IMR resource set/resource setting may be a value more than the existing value (for example, 128 which is twice the existing value).

### [Variations]

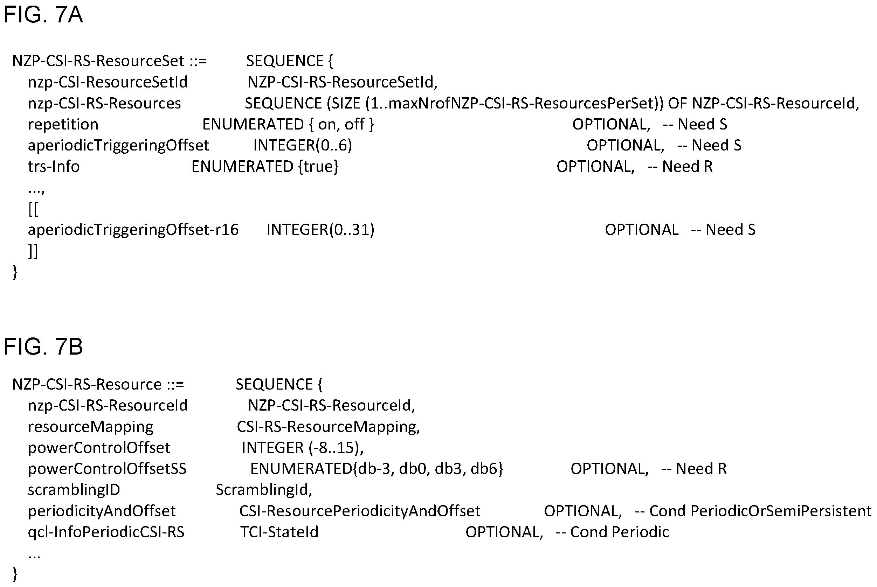

In Rel. 16, for a resource in each resource set (at least one of CMR based on NZP-CSI-RS, CMR based on SSB, CSI-IM, and NZP-IMR based on NZP-CSI-RS), some information elements are configured for each resource set. For example, for a CMR based on NZP-CSI-RS, some information elements configured for each NZP-CSI-RS resource set (NZP-CSI-RS-ResourceSet) are at least one of repetition, aperiodic triggering offset (aperiodicTriggeringOffset), tracking RS information (trs-Info), and Rel. 16 aperiodic triggering offset (aperiodicTriggeringOffset-r16) (Fig. 7).

For resources in different resource sets (for different TRPs), specific information element may be according to any of the following choices 1 and 2. Different TRPs may have different grouping IDs (variations of the first embodiment), for example.

### [[Choice 1]]

Similar to Rel. 16, the specific information element is independent for each resource set. Values of all specific information elements may be different in different resource sets.

### [[Choice 2]]

Values of some specific information elements are common at specific levels (a plurality of specific parameters). The values of some other specific information elements may be different at a specific level (a plurality of specific parameters), or may be different at a level different from the specific level (another plurality of parameters). The specific level may be at least one of the following options 1 to 3.
- Option 1: grouping/TRP of corresponding resource sets
- Option 2: Two CSI-RS resource sets for one trigger state
- Option 3: All resource sets

For example, a value of an information element of repetition may be common to all resource sets. A value of an information element of a period and an offset (periodicityAndOffset) may be different for each TRP, or may be common to a plurality of resource sets in one TRP.

For example, a value of an information element of starting PRB (startingPRB)/bandwidth/antenna ports/density may be different for each TRP, or may be common to a plurality of resource sets in one TRP.

For example, a value of an information element of aperiodic triggering offset (aperiodicTriggerOffset)/Rel. 16 aperiodic triggering offset (aperiodicTriggeringOffset-r16) may be common to two CSI-RS resource sets for one trigger state.

For each resource set/resource setting, the number of resources actually configured by the RRC may be according to any one of the following choices 1 and 2.

### [Choice 1]

The number of resources actually configured by the RRC for each resource set/resource setting is common at a specific level (a plurality of specific parameters).

### [Choice 2]

The number of resources actually configured by the RRC for each resource set/resource setting is different for each specific level (specific parameter).

In other words, the resource setting may include at least one of a first information element common to any one of a plurality of resource sets associated with one TRP or one grouping, two resource sets associated with one trigger state, and all resource sets, and a second information element different to a plurality of transmission/reception points.

In accordance with this embodiment, the number of resources/RRC IE for group-based beam reporting for a multi-TRP/multi-UE panel can be appropriately configured.

### <Other Embodiments>

A higher layer parameter (RRC IE)/UE capability corresponding to a function (feature) in each embodiment described above may be defined. The higher layer parameter may indicate whether or not the function is enabled. The UE capability may indicate whether the UE supports this function.

The UE in which the higher layer parameter corresponding to the function is configured may perform the function. "The UE in which the higher layer parameter corresponding to the function is not configured does not perform the function (for example, according to Rel. 15/16)" may be defined.

The UE that has reported the UE capability indicating support for the function may perform the function. "The UE that does not report the UE capability indicating support for the function does not perform the function (for example, according to Rel. 15/16)" may be defined.

When the UE reports the UE capability indicating to support the function, and a higher layer parameter corresponding to the function is configured, the UE may perform the function. "When the UE does not report the UE capability indicating to support the function or the higher layer parameter corresponding to the function is not configured, the UE does not perform the function (for example, according to Rel. 15/16)" may be defined.

The UE capability may indicate to the resource settings of the P/SP/AP whether or not to support configuring the resource set by the RRC for measurement/reporting of group-based beams for the CSI resource settings. If the UE supports it, the UE capability may indicate for the resource settings of the P/SP/AP the number (maximum number) of resource sets configured by the RRC for measurement/reporting of group-based beams for the CSI resource settings.

The UE capability may indicate whether or not to support configuring two CSI-RS resource sets associated with one trigger state for group-based beam measurement/reporting.

The UE capability may indicate whether or not to support grouping/association of CSI-RS resource sets with TRPs.

The UE capability may indicate, for each resource setting of the P/SP/AP, whether or not to support configuring the resource for measurement/reporting of group-based beams for the CSI resource settings by the RRC. If the UE supports it, the UE capability may indicate, for each resource setting of the P/SP/AP, at least one of the number (maximum number) of resources configured by RRC for each resource set and the number (maximum number) of resources configured by RRC for each resource setting, for measurement/reporting of a group-based beam for the CSI resource setting. The resource may be at least one of CMR based on NZP-CSI-RS, CMR based on SSB, CSI-IM, and NZP-IMR based on NZP-CSI-RS.

The UE capability may indicate whether or not to support the same (common) or different specific information elements for any one of multiple resource sets, multiple TRPs, one TRP, two resource sets for one trigger state, and all resource sets.

The UE capabilities/higher layer parameters described above may be common or different between L1-RSRP and L1-SINR.

According to the UE capabilities/higher layer parameters described above, the UE can realize the above functions while maintaining compatibility with existing specifications.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

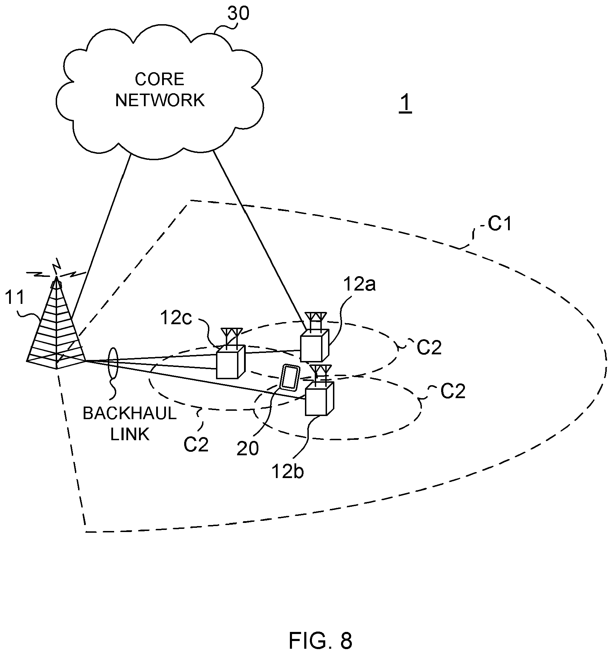

Fig. 8 is a diagram illustrating an example of a schematic configuration of the radio communication system according to the embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

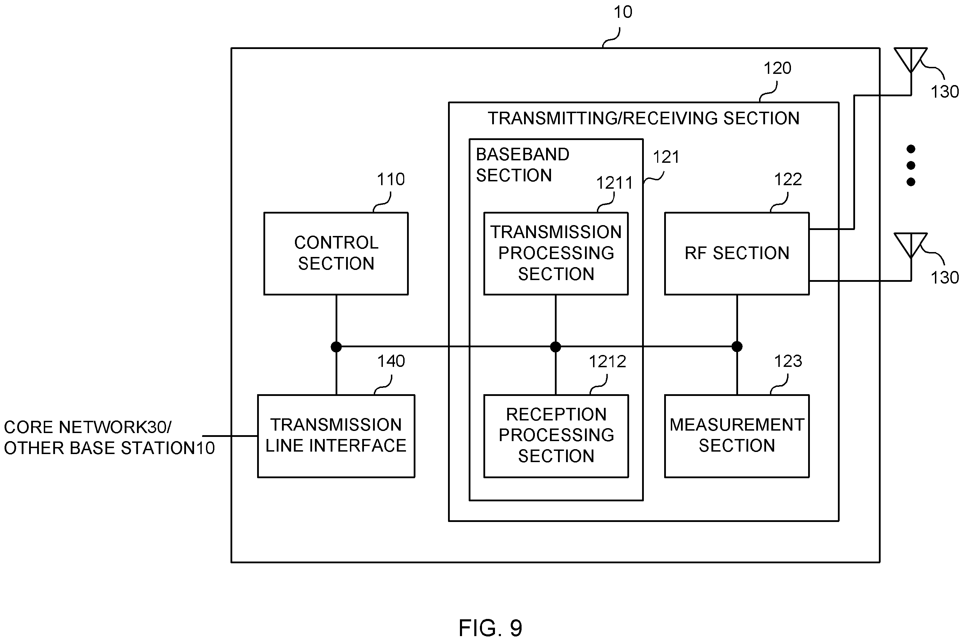

Fig. 9 is a diagram illustrating an example of a configuration of the base station according to the embodiment. The base station 10 includes a control section 110, a transmission/reception section 120, a transmission/reception antenna 130, and a transmission line interface 140. Note that one or more control sections 110, one or more transmission/reception sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be transmitted as a signal, control information, a sequence, and the like, and may forward the data, the control information, the sequence, and the like to the transmission/reception 120. The control section 110 may perform call processing (such as configuration or releasing) of a communication channel, management of the state of the base station 10, and management of a radio resource.

The transmission/reception section 120 may include a baseband section 121, a radio frequency (RF) section 122, and a measurement section 123. The baseband section 121 may include a transmission processing section 1211 and a reception processing section 1212. The transmission/reception section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmission/reception section 120 may be configured as an integrated transmission/reception section, or may be configured by a transmitting section and a receiving section. The transmitting section may include the transmission processing section 1211 and the RF section 122. The receiving section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a Tx beam or a reception beam by using digital beam forming (for example, precoding), analog beam forming (for example, phase rotation), and the like.

The transmission/reception section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmission/reception section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmission/reception section 120 (RF section 122) may perform modulation to a radio frequency band, filtering processing, amplification, and the like on the baseband signal, and may transmit a signal in the radio frequency band via the transmission/reception antenna 130.

Meanwhile, the transmission/reception section 120 (RF section 122) may perform amplification, filtering processing, demodulation to a baseband signal, and the like on the signal in the radio frequency band received by the transmission/reception antenna 130.

The transmission/reception section 120 (reception processing section 1212) may apply reception processing such as analog-digital conversion, fast Fourier transform (FFT) processing, inverse discrete fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmission/reception section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmission/reception section 120, the transmission/reception antenna 130, or the transmission line interface 140.

The transmission/reception section 120 may transmit configuration of a beam report based on a plurality of groups, and resource setting. The control section 110 may control reception of the beam report on the basis of the resource setting. At least one limitation of the number of resource sets and the number of resources in the resource setting may be different from a limitation in a case where beam reporting based on the plurality of groups is not configured.

### (User Terminal)

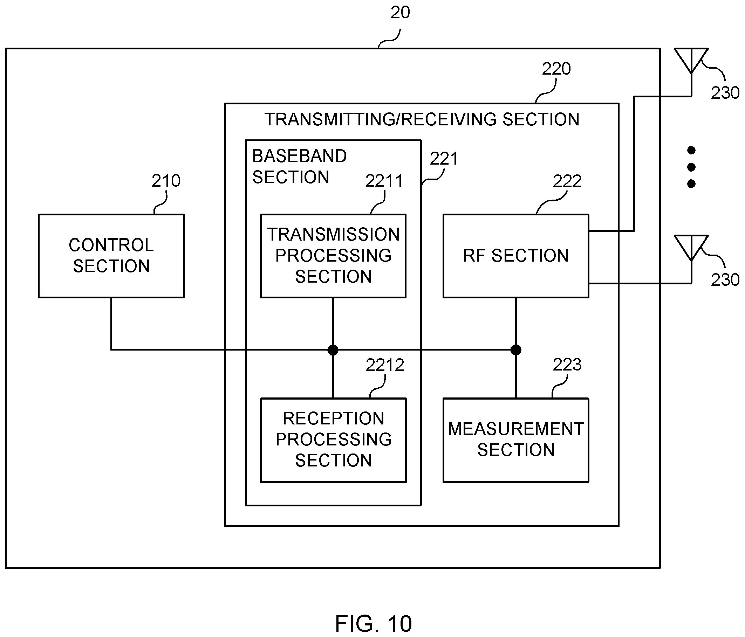

Fig. 10 is a diagram illustrating an example of a configuration of the user terminal according to the embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmission/reception section 220 and the transmission/reception antenna 230. The control section 210 may generate data, control information, a sequence, and the like to be transmitted as signals, and may forward the data, control information, sequence, and the like to the transmission/reception section 220.

The transmission/reception section 220 may include a baseband section 221, an RF section 222, and a measurement section 223. The baseband section 221 may include a transmission processing section 2211 and a reception processing section 2212. The transmission/reception section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmission/reception section 220 may be formed as an integrated transmission/reception section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described on the basis of common recognition in the technical field related to the present disclosure, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a Tx beam or a reception beam by using digital beam forming (for example, precoding), analog beam forming (for example, phase rotation), and the like.

The transmission/reception section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmission/reception section 220 (transmission processing section 2211) may perform transmission processing such as channel encoding (which may include error correcting encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a given channel (e.g., PUSCH), the transmission/reception section 220 (transmission processing section 2211) may perform DFT processing as the transmission processing in order to transmit the channel using a DFT-s-OFDM waveform. In a case where it is not the case, DFT processing need not be performed as the transmission processing.

The transmission/reception section 220 (RF section 222) may perform modulation to a radio frequency range, filtering processing, amplification, and the like on the baseband signal, to transmit a signal in the radio frequency range via the transmission/reception antenna 230.

Meanwhile, the transmission/reception section 220 (RF section 222) may perform amplification, filtering processing, demodulation to a baseband signal, and the like on the signal in the radio frequency range received by the transmission/reception antenna 230.

The transmission/reception section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmission/reception section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmission/reception section 220 or the transmission/reception antenna 230.

The transmission/reception section 220 may receive configuration of a beam report based on a plurality of groups, and resource setting. The control section 210 may control the beam report on the basis of the resource setting. At least one limitation of the number of resource sets and the number of resources in the resource setting may be different from a limitation in a case where beam reporting based on the plurality of groups is not configured.

In the resource setting, two channel state information reference signal (CSI-RS) resource sets may be associated with one trigger state.

In the resource setting, one or more CSI-RS resource sets may be associated with a transmission/reception point.

The resource setting may include at least one of a first information element common to any one of a plurality of resource sets associated with one transmission/reception point or one grouping, two resource sets associated with one trigger state, and all resource sets, and a second information element different to a plurality of transmission/reception points.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, asgivening, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

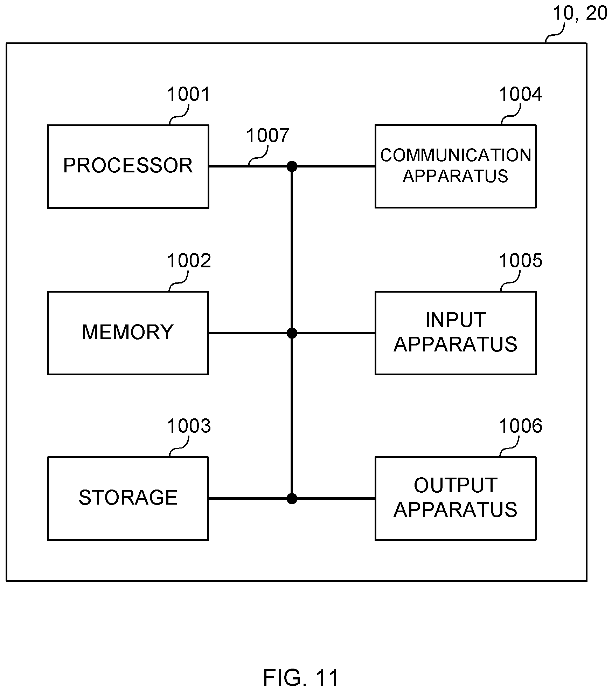

For example, the base station, the user terminal, and the like according to one embodiment of the present disclosure may function as a computer that executes the processing of the radio communication method of the present disclosure. Fig. 11 is a diagram illustrating an example of a hardware configuration of the base station and the user terminal according to the embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by given software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmission/reception section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmission/reception section 120 (220), the transmission/reception antenna 130 (230), and the like described above may be implemented by the communication apparatus 1004. The transmission/reception section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTI is not limited to this.

The TTI may be a transmission time unit of a channel-coded data packet (transport block), a code block, a codeword, etc. or may be a processing unit of scheduling, link adaptation, etc. When the TTI is given, a time interval (e.g., the number of symbols) to which a transport block, a code block, a codeword, or the like is actually mapped may be shorter than the TTI.

Note that, when one slot or one minislot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

Also, an RB may include one or more symbols in the time domain, and may be one slot, one mini slot, one subframe or one TTI in length. One TTI, one subframe, etc. may each be comprised of one or more resource blocks.

Note that one or more RBs may be referred to as a physical resource block (PRB), a sub-carrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a given signal/channel outside the active BWP. Note that "cell", "carrier", etc. in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to given values, or may be represented using other corresponding information. For example, a radio resource may be specified by a given index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, a MAC control element (CE).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a wireless communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. In addition, terms such as "uplink" and "downlink" may be replaced with words corresponding to terminal-to-terminal communication (for example, "sidelink"). For example, an uplink channel, a downlink channel, etc. may be replaced with a side link channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, to "determine" as used herein may be interpreted to mean making judgements and determinations related to receiving (for example, receiving information), transmitting (for example, transmitting information), inputting, outputting, accessing (for example, accessing data in a memory) and so on.

In addition, to "determine" as used herein may be interpreted to mean making judgements and determinations related to resolving, selecting, choosing, establishing, comparing and so on. In other words, to "determine" as used herein may be interpreted to mean making judgements and determinations related to some action.

In addition, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2021-088531 filed on May 26, 2021. The contents of this are all incorporated herein.

## Claims

1. A terminal comprising:
a receiving section that receives configuration of a beam report based on a plurality of groups, and resource setting; and
a control section that controls the beam report on the basis of the resource setting,
wherein at least one limitation of the number of resource sets and the number of resources in the resource setting is different from a limitation in a case where the beam report based on the plurality of groups is not configured.

2. The terminal according to claim 1, wherein in the resource setting, two channel state information reference signal (CSI-RS) resource sets are associated with one trigger state.

3. The terminal according to claim 1, wherein in the resource setting, one or more CSI-RS resource sets are associated with a transmission/reception point.

4. The terminal according to any one of claims 1 to 3, wherein the resource setting includes at least one of a first information element common to any one of a plurality of resource sets associated with one transmission/reception point or one grouping, two resource sets associated with one trigger state, and all resource sets, and a second information element different to a plurality of transmission/reception points.

5. A radio communication method of a terminal, the method comprising the steps of:
receiving configuration of a beam report based on a plurality of groups, and resource setting; and
controlling the beam report on the basis of the resource setting,
wherein at least one limitation of the number of resource sets and the number of resources in the resource setting is different from a limitation in a case where the beam report based on the plurality of groups is not configured.

6. A base station, comprising:
a transmitting section that transmits configuration of a beam report based on a plurality of groups, and resource setting; and
a control section that controls reception of the beam report on the basis of the resource setting,
wherein at least one limitation of the number of resource sets and the number of resources in the resource setting is different from a limitation in a case where the beam report based on the plurality of groups is not configured.
